Europäisches Patentamt

European Patent Office

Office européen des brevets

(11) Veröffentlichungsnummer: **0 254 927**
**A2**

## EUROPÄISCHE PATENTANMELDUNG

(21) Anmeldenummer: 87109916.4

(22) Anmeldetag: 09.07.87

(51) Int. Cl.⁴: **H04N 5/76 , H04N 5/44**

(30) Priorität: 26.07.86 DE 3625382

(43) Veröffentlichungstag der Anmeldung:
03.02.88 Patentblatt 88/05

(84) Benannte Vertragsstaaten:
AT DE FR GB IT

(71) Anmelder: GRUNDIG E.M.V.
Elektro-Mechanische Versuchsanstalt Max
Grundig holländ. Stiftung & Co. KG.
Kurgartenstrasse 37
D-8510 Fürth(DE)

(72) Erfinder: Hegendörfer, Max, Dipl.-Ing. c/o
GRUNDIG E.M.V.
Max Grundig holländ.Stiftung & Co.KG
Kurgartenstrasse 37 D-8510 Fürth/Bay(DE)

(54) Einrichtung zur Aufzeichnung von Satelliten-Fernsehsendungen.

(57) Bei einer Einrichtung zur Aufzeichnung von Satelliten-Fernsehsendungen mit einem Satelliten-Empfänger (2) zur Verarbeitung eines Satelliten-Fernsehsignals, einem Videorecorder (3) zur Aufzeichnung des Satelliten-Fernsehsignals, und einer den Videorecorder (3) steuernden Speichereinrichtung, in der die Daten aufzuzeichnender Sendungen abgespeichert sind, wird vorgeschlagen, dem Satelliten-Empfänger (2) von der Speichereinrichtung kurz vor dem Beginn der jeweils aufzuzeichnenden Sendung ein Steuersignal zuzuführen, welches den Satelliten-Empfänger (2) auf das gewünschte Satelliten-Programm ein-oder umschaltet, und nach Beendigung der aufzuzeichnenden Sendung ein weiteres Steuersignal zuzuführen, welches den Satelliten-Empfänger (2) vom eingeschalteten Zustand in den Bereitschaftsbetrieb oder gegebenenfalls auf ein aufzuzeichnendes Folgeprogramm umschaltet.

FIGUR 2

## EINRICHTUNG ZUR AUFZEICHNUNG VON SATELLITEN-FERNSEHSENDUNGEN

Die vorliegende Erfindung betrifft eine Einrichtung zur Aufzeichnung von Satelliten-Fernsehsendungen mit den im Oberbegriff des Anspruchs 1 angegebenen Merkmalen.

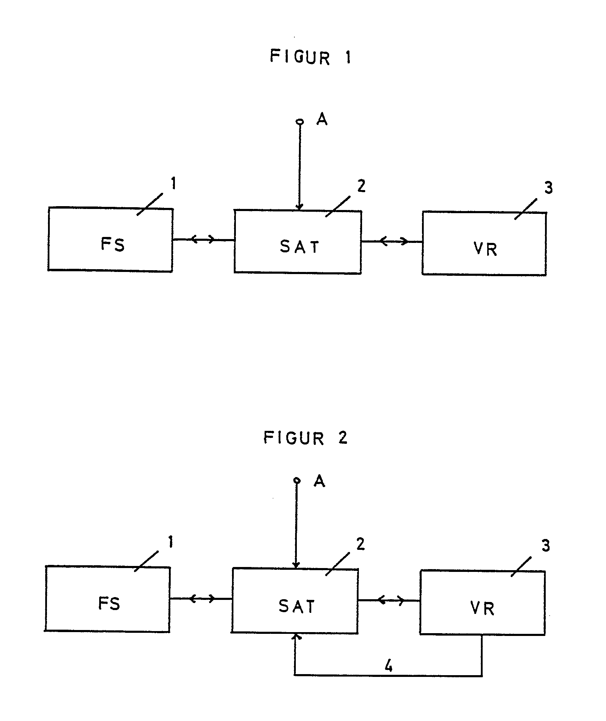

In letzter Zeit nimmt die Anzahl der ihr Programmangebot über Satellit verbreitenden Fernsehsender immer weiter zu. Eine mehr oder weniger zwangsläufige Folge ist der Wunsch, über Satelliten verbreitete Fernsehsendungen auf Heimvideorecordern aufzuzeichnen. Ein bekanntes Aufzeichnungssystem ist in der Fig. 1 angegeben und arbeitet wir folgt:

Am Videorecorder 3 werden entweder mittels der nicht gezeichneten Zehnertastatur oder auch über eine ebenfalls nicht gezeichnete Fernbedienung die Daten einer aufzuzeichnenden Satelliten-Fernsehsendung (Quelle der Sendung, wie z. B. Modulatorkanal des Satelliten-Empfängers oder AV-Buchse, Anfangs-und Endzeit, Aufnahmetag) eingegeben. Am Satelliten-Empfänger 2 wird durch Tastendruck manuell die gewünschte Programmnummer eingestellt (z. B. 1. Programm, 2. Programm, ...). Bei Erreichen der gewünschten Anfangszeit schaltet der Videorecorder 3 automatisch ein und zeichnet die gewünschte Sendung auf. Dabei erfolgt die Signalverarbeitung auf bekannte Art und Weise: Das von der "Outdoor-Unit" (in der Parabolantenne eingebauter Mikrowellenempfänger) empfangene Satelliten-Fernsehsignal, welches am Eingang A anliegt, wird dem Satelliten-Empfänger 2 zugeführt und von diesem nach Umsetzung in die Videoebene an die AV-Buchse (oder Euro-AV-Buchse) ausgegeben. Natürlich ist eine gleichzeitige Ausgabe über einen in den Satelliten-Empfänger eingebauten Modulator ebenso möglich. Eines dieser Ausgangssignale des Satelliten-Empfängers dient (in herkömmlicher Weise) dem Videorecorder als Signalquelle.

Ein derartiges Aufzeichnungssystem weist folgende Nachteile auf: Soll eine Satalliten-Fernsehsendung automatisch aufgezeichnet werden, so muß der Benutzer - bevor er das Gerät verläßt - den Satelliten-Empfänger 2 einschalten und auf den gewünschten Kanal bzw. das gewünschte Programm umschalten. Von diesem Zeitpunkt an bis zum Beginn der gewünschten Sendung ist das Gerät in einem normalen Betriebszustand und verbraucht unnötig viel Energie. Weiterhin ist eine automatische Aufzeichnung von Satelliten Sendungen verschiedener Satelliten-Sender bzw. - Programme nicht möglich, da hierzu beispielsweise zwischen dem Ende der ersten und dem Beginn der zweiten aufzuzeichnenden Sendung der Satelliten-Empfänger 2 manuell auf den neuen Sender umgeschaltet werden müßte (Umschaltung auf andere Polarisationsrichtung, andere Ton-Norm, ...).

Der vorliegenden Erfindung liegt die Aufgabe zugrunde, eine Einrichtung der im Oberbegriff des Anspruchs 1 angegebenen Art derart weiterzubilden, die eine automatische Aufzeichnung von Fernsehsendungen verschiedener Satelliten-Sender bzw. -Programme nacheinander ermöglicht und dabei ein unnötiger Energieverbrauch vermieden wird.

Diese Aufgabe wird durch die im kennzeichnenden Teil des Patentanspruchs 1 angegebenen Merkmale gelöst. Vorteilhafte Ausgestaltungen ergeben sich aus den Unteransprüchen.

Im folgenden wird die Erfindung und die damit erzielbaren vorteilhaften Eigenschaften anhand eines in Fig. 2 dargestellten Ausführungsbeispiels näher erläutert:

Zunächst werden mittels einer (nicht gezeichneten) Fernbedienung oder mittels einer (nicht gezeichneten) Zehnertastatur die Daten der aufzuzeichnenden Sendungen (Programm-bzw. Kanalnummern, Anfangs-und Endzeiten, Aufnahmetage) in eine (nicht gezeichnete) Speichereinrichtung eingegeben. Diese Speichereinrichtung kann entweder im Fernbedienungsgeber oder im Videorecorder oder im Satelliten-Empfänger selbst angeordnet sein. Der Satelliten-Empfänger 2 wird -falls er momentan nicht für eine Direktbetrachtung benötigt wird - ebenso wie der Videorecorder 3 in den Bereitschaftsbetrieb gebracht. In diesem Betriebszustand ist der Energieverbrauch des Satelliten-Empfängers 2 wesentlich kleiner als im normalen Betriebszustand. Kurz vor dem Erreichen der Anfangszeit der ersten aufzuzeichnenden Satelliten-Fernsehsendung wird dem Satelliten-Empfänger 2 von der Speichereinrichtung, in der die Daten der aufzuzeichnenden Sendungen abgespeichert sind und welche im vorliegenden Ausführungsbeispiel im Videorecorder 3 angeordnet ist, ein Steuersignal zugeführt, welches den Satelliten-Empfänger 2 vom Bereitschaftsbetrieb in den normalen Betriebszustand überführt und gleichzeitig auf das gewünschte Programm umschaltet.

Die Übertragung dieses Steuersignals kann entweder über eine eigens zu diesem Zweck vorgesehene Leitung 4 (siehe Fig. 2) oder über eine ohnehin vorhandene Signalverbindung erfolgen, z. B. über eine IR-Verbindung, wenn die Speichereinrichtung im Fernbedienungsgeber angeordnet ist, oder über die Euro-AV-Buchse des Videorecorders.

Nach Beendigung einer aufzuzeichnenden Sendung wird der Aufzeichnungsvorgang automatisch gestoppt und der Satelliten-Emfpänger 2 durch ein weiteres, von der Speichereinrichtung ausgehendes Steuersignal, welches ebenso übertragen wird wie es oben beschrieben wurde, wieder in den Bereitschaftsbetrieb geschaltet (oder gegebenenfalls auf das Folgeprogramm umgeschaltet). Kurz vor dem Erreichen der Anfangszeit der nächsten aufzuzeichnenden Sendung wird der Satelliten-Empfänger durch ein weiteres Steuersignal von der Speichereinrichtung erneut vom Bereitschaftsbetrieb in den normalen Betriebszustand umgeschaltet und somit zur Aufzeichnung der nächsten Sendung (ggf. von einem anderen Sender als die erste aufgezeichnete Sendung) vorbereitet.

Auf diese Art und Weise ist eine automatische Aufzeichnung von zwei oder mehr Fernsehsendungen verschiedener Satelliten-Programme nacheinander möglich, ohne daß es einer manuellen Umschaltung des Satelliten-Empfängers bedarf und ohne daß der Satelliten-Empfänger im Wartezustand unnötig viel Energie verbraucht.

Die beschriebene Einrichtung ist auch verwendbar, wenn der Satelliten-Empfänger 2 und ein herkömmlicher Fernsehempfänger 1 zu einer baulichen Einheit zusammengefaßt sind.

Die beanspruchte Einrichtung ist ferner unabhänig davon einsetzbar, über welche Anschlußbuchsen (AV-Buchse, Euro-AV-Buchse, Antenneneingang) von Satelliten-Empfänger 2, Fernsehempfänger 1 und Videorecorder 3 die Übertragung der aufzuzeichnenden Informationssignale erfolgt.

Ferner ist die vorliegende Erfindung auch ohne weiteres bei einem nach dem bekannten VPS-Verfahren arbeitenden Aufzeichnungssystem verwendbar.

**Ansprüche**

1. Einrichtung zur Aufzeichnung von Satelliten-Fernsehsendungen, mit
-einem Satelliten-Empfänger zur Verarbeitung eines Satelliten-Fernsehsignals,
-einem Videorecorder zur Aufzeichnung des Satelliten-Fernsehsignals, und
-einer den Videorecorder steuernden Speichereinrichtung, in der die Daten aufzuzeichnender Sendungen abgespeichert sind,
**dadurch gekennzeichnet,** daß dem Satelliten-Empfänger (2) von der Speichereinrichtung kurz vor dem Beginn der jeweils aufzuzeichnenden Sendung ein Steuersignal zugeführt wird, welches den Satelliten-Empfänger (2) auf das gewünschte Satelliten-Programm ein-oder umschaltet, und nach Beendigung der aufzuzeichnenden Sendung ein weiteres Steuersignal zugeführt wird, welches den Satelliten-Empfänger vom eingeschalteten Zustand in den Bereitschaftsbetrieb oder gegebenenfalls auf ein aufzuzeichnendes Folgeprogramm umschaltet.

2. Einrichtung nach Anspruch 1, **dadurch gekennzeichnet,** daß die Speichereinrichtung in einem Fernbedienungsgeber angeordnet ist.

3. Einrichtung nach Anspruch 1, **dadurch gekennzeichnet,** daß die Speichereinrichtung im Videorecorder angeordnet ist (Fig. 2).

4. Einrichtung nach Anspruch 1, **dadurch gekennzeichnet,** daß die Speichereinrichtung im Satelliten-Empfänger angeordnet ist.

5. Einrichtung nach einem der Ansprüche 1 bis 4, **dadurch gekennzeichnet,** daß die Steuersignale über eine eigens zu diesem Zweck vorgesehene Signalverbindung (4) übertragen werden (Fig. 2).

6. Einrichtung nach einem der Ansprüche 1 bis 4, **dadurch gekennzeichnet,** daß die Steuersignale über eine ohnehin vorhandene Signal-Verbindung übertragen werden.

# FIGUR 1

# FIGUR 2